(19) Europäisches Patentamt / European Patent Office / Office européen des brevets

(11) **EP 4 425 749 A1**

(12) **EUROPEAN PATENT APPLICATION**
published in accordance with Art. 153(4) EPC

(43) Date of publication:
**04.09.2024 Bulletin 2024/36**

(21) Application number: **21962369.1**

(22) Date of filing: **27.10.2021**

(51) International Patent Classification (IPC):
***H02K 1/14*** *(2006.01)*

(52) Cooperative Patent Classification (CPC):
**H02K 1/14**

(86) International application number:
**PCT/JP2021/039592**

(87) International publication number:
**WO 2023/073820 (04.05.2023 Gazette 2023/18)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **MITSUBISHI ELECTRIC CORPORATION**
**Chiyoda-ku**
**Tokyo 100-8310 (JP)**

(72) Inventors:
• **HIROSAWA, Yuji**
  **Tokyo 100-8310 (JP)**
• **YABE, Koji**
  **Tokyo 100-8310 (JP)**
• **HIGASHI, Yuki**
  **Tokyo 100-8310 (JP)**

(74) Representative: **Pfenning, Meinig & Partner mbB**
**Patent- und Rechtsanwälte**
**Joachimsthaler Straße 10-12**
**10719 Berlin (DE)**

(54) **ELECTRIC MOTOR, COMPRESSOR, AND REFRIGERATION CYCLE DEVICE**

(57)     A motor includes a rotor comprising a rotor core having an annular shape about an axis and formed of electromagnetic steel sheets stacked in a direction of the axis, the rotor including a permanent magnet attached to the rotor core, and a stator comprising a stator core surrounding the rotor core and formed of electromagnetic steel sheets stacked in the direction of the axis, the stator comprising a winding wound on the stator core and formed of an aluminum wire. A stacking factor O1 of the electromagnetic steel sheets of the stator core and a stacking factor O2 of the electromagnetic steel sheets of the rotor core satisfy:

$$O1 < O2.$$

FIG. 6

EP 4 425 749 A1

**Description**

**TECHNICAL FIELD**

The present disclosure relates to a motor, a compressor, and a refrigeration cycle apparatus.

**BACKGROUND ART**

A motor includes a rotor having a permanent magnet, and a stator having a winding. A copper wire is generally used for the winding, but the use of aluminum wire, which is low in cost, is increasing (see, for example, Patent Reference 1).

**PRIOR ART REFERENCE**

**PATENT REFERENCE**

Patent Reference 1: International Patent Publication No. WO2017/126053 (see, for examples, paragraphs 0017-0019)

**SUMMARY OF THE INVENTION**

**PROBLEM TO BE SOLVED BY THE INVENTION**

However, the aluminum wire has a higher electrical resistance than the copper wire, and thus the use of the aluminum wire for the winding increases the amount of heat generation. When the temperature of the winding rises because of the increase in the amount of heat generation, damage on an insulating film of the winding or the like may occur. Thus, it is desired to suppress a temperature rise of the winding.

The present disclosure is made to solve the above-described problem, and an object of the present disclosure is to suppress a temperature rise in the case where an aluminum wire is used for a winding.

**MEANS OF SOLVING THE PROBLEM**

A motor according to the present disclosure comprises a rotor including a rotor core having an annular shape about an axis and formed of electromagnetic steel sheets stacked in a direction of the axis and a permanent magnet attached to the rotor core, and a stator including a stator core surrounding the rotor core and formed of electromagnetic steel sheets stacked in the direction of the axis and a winding wound on the stator core and formed of an aluminum wire. A stacking factor O1 of the electromagnetic steel sheets of the stator core and a stacking factor O2 of the electromagnetic steel sheets of the rotor core satisfy:

$$O1 < O2.$$

**EFFECTS OF THE INVENTION**

With this configuration, since the stacking factor O1 of the electromagnetic steel sheets of the stator core and the stacking factor O2 of the electromagnetic steel sheets of the rotor core satisfy O1 < O2, the amount of refrigerant passing through clearances between the electromagnetic steel sheets of the stator core can be made larger than the amount of refrigerant passing through clearances between the electromagnetic steel sheets of the rotor core. Thus, heat of the winding can be dissipated by the refrigerant passing through the clearances between the electromagnetic steel sheets of the stator core, and a temperature rise of the winding can be suppressed.

**BRIEF DESCRIPTION OF THE DRAWINGS**

FIG. 1 is a transverse sectional view illustrating a motor according to a first embodiment.
FIG. 2 is a transverse sectional view illustrating a stator core according to the first embodiment.
FIG. 3 is a transverse sectional view illustrating a split core of the first embodiment.
FIG. 4 is a transverse sectional view illustrating a part of the rotor according to the first embodiment.
FIG. 5 is a longitudinal sectional view illustrating the motor according to the first embodiment.
FIG. 6 is a schematic view illustrating electromagnetic steel sheets of the stator core and a rotor core according to the first embodiment.
FIGS. 7(A) and 7(B) are views illustrating configuration examples of the stator core according to the first embodiment.
FIG. 8 is a schematic view for describing a method for winding a winding according to the first embodiment.
FIG. 9 is a schematic view illustrating a winding pattern of the winding according to the first embodiment.
FIG. 10 is a schematic view illustrating a contact portion between the stator core and the winding in the stator according to the first embodiment.
FIG. 11 is a schematic view illustrating a contact portion between a stator core and a winding in a stator of a comparative example.
FIG. 12 is a schematic view illustrating electromagnetic steel sheets of a stator core and a rotor core according to a second embodiment.
FIGS. 13(A) and 13(B) are schematic views for describing a method for adjusting a gap between the electromagnetic steel sheets according to the second embodiment.
FIGS. 14(A) and 14(B) are schematic views for describing a method for adjusting a gap between the electromagnetic steel sheets according to the second embodiment.
FIG. 15 is a schematic view illustrating a contact portion between the stator core and a winding in a stator according to the second embodiment.

FIG. 16 is a schematic view illustrating electromagnetic steel sheets of a stator core and a rotor core according to a third embodiment.

FIGS. 17(A) and 17(B) are respectively a perspective view and a plan view showing a method for measuring an iron loss of electromagnetic steel sheets according to the third embodiment.

FIG. 18 is a longitudinal sectional view illustrating a compressor to which the motor of each embodiment is applicable.

FIG. 19 is a view illustrating a refrigeration cycle apparatus including the compressor of FIG. 18.

## MODE FOR CARRYING OUT THE INVENTION

### FIRST EMBODIMENT

#### (Configuration of Motor)

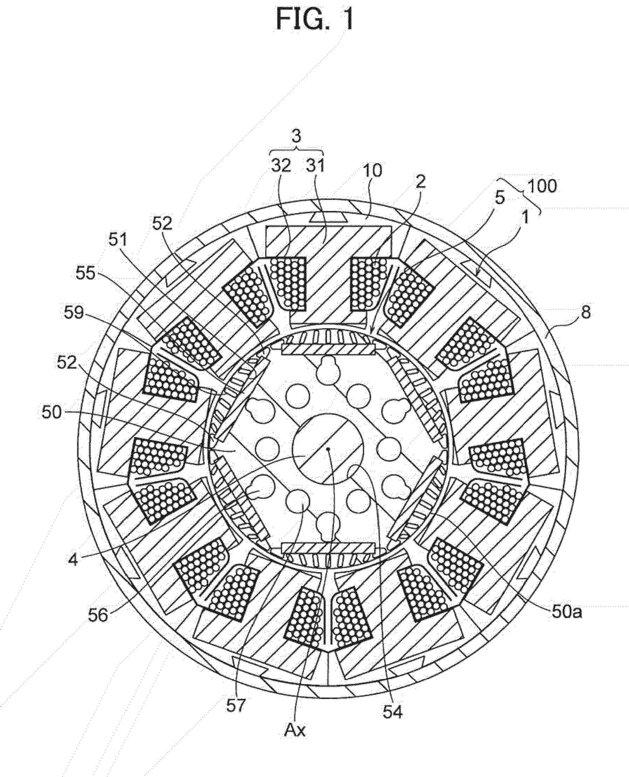

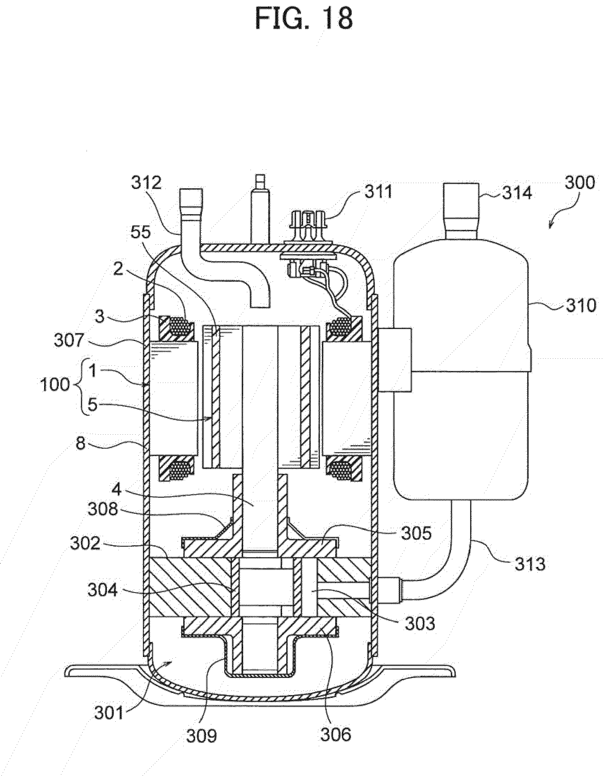

First, a motor 100 according to a first embodiment will be described. FIG. 1 is a transverse sectional view illustrating the motor 100 according to the first embodiment. The motor 100 illustrated in FIG. 1 is a permanent magnet-embedded motor and used for, for example, a compressor. The compressor will be described with reference to FIG. 18.

The motor 100 includes a rotor 5 including a shaft 4 as a rotation shaft, and a stator 1 surrounding the rotor 5. An air gap of, for example, 0.3 to 1.0 mm is formed between the stator 1 and the rotor 5. The stator 1 is incorporated in a cylindrical shell 8 of the compressor.

In the following description, a direction of an axis Ax that is a rotation center axis of the rotor 5 is referred to as an "axial direction." A radial direction about the axis Ax is referred to as a "radial direction." A circumferential direction about the axis Ax is referred to as a "circumferential direction." A sectional view in a plane parallel to the axis Ax is referred to as a longitudinal sectional view, and a sectional view in a plane orthogonal to the axis Ax is referred to as a transverse sectional view.

#### (Configuration of Stator)

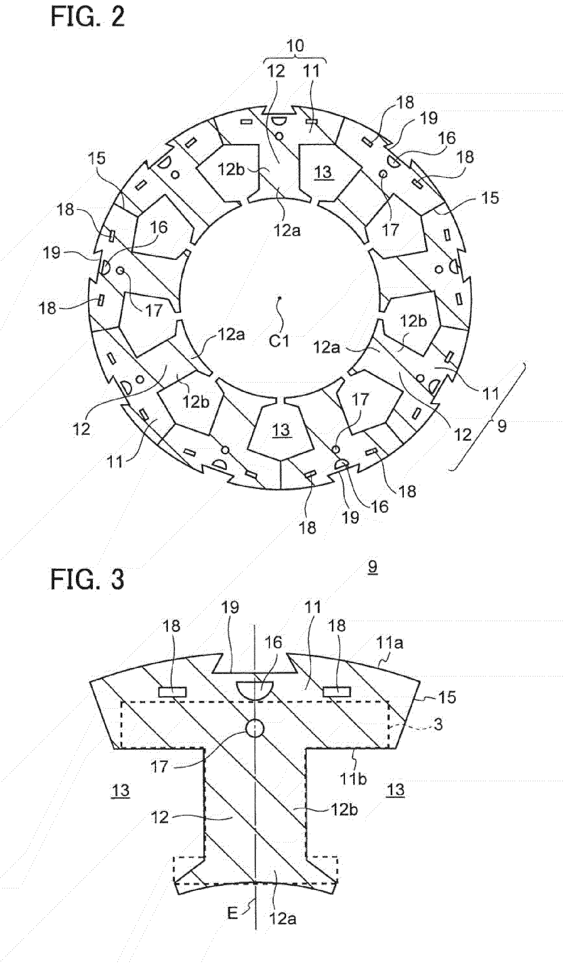

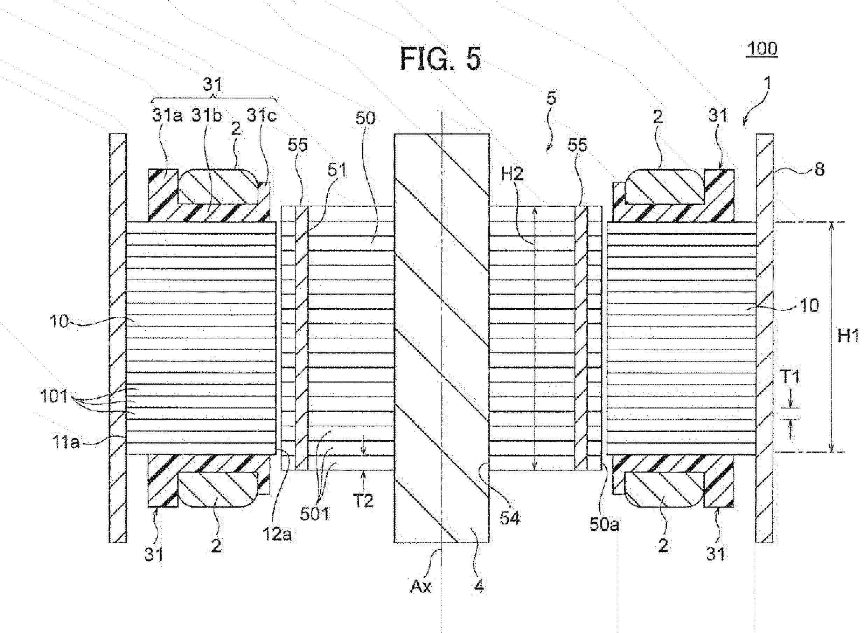

The stator 1 includes a stator core 10 and a winding 2 wound on the stator core 10. FIG. 2 is a sectional view illustrating the stator core 10. The stator core 10 is configured so that electromagnetic steel sheets 101 (FIG. 5) are stacked in the axial direction and fixed together by crimping portions 17 and 18 (FIG. 3). Front and back surfaces of the electromagnetic steel sheets 101 are coated with not-shown insulating films. Each of the electromagnetic steel sheets 101 has a thickness of 0.1 to 0.7 [mm], which will be described later.

The stator core 10 includes an annular yoke 11 and a plurality of teeth 12 extending inward in the radial direction from the yoke 11. The teeth 12 are arranged at equal intervals in the circumferential direction. The number of the teeth 12 is nine in this example, but is not limited to nine.

Each tooth 12 has a tooth tip 12a whose width in the circumferential direction is wider than the other portions of the tooth 12. The tooth tip 12a is located at the inner side of the tooth 12 in the radial direction. The tooth tip 12a faces the outer circumference of the rotor 5 (FIG. 1). A portion between the tooth tip 12a of the tooth 12 and the yoke 11 is referred to as an extension portion 12b. The width of the extension portion 12b in the circumferential direction is uniform. Slots 13 are formed between the teeth 12 that are adjacent to each other in the circumferential direction. Each slot 13 is a region in which the winding 2 wound around the tooth 12 is housed.

The stator core 10 is formed by coupling a plurality of split cores 9 in an annular shape. Each of the split cores 9 is a block including a corresponding one of the teeth 12. The split cores 9 are divided at split faces 15 formed in the yoke 11. The number of the split cores 9 is equal to the number of the teeth 12, and is nine in this example.

The stator core 10 is not limited to the configuration in which the split cores 9 are coupled in the annular shape. The stator core 10 may be configured so that electromagnetic steel sheets each punched into an annular shape are stacked.

FIG. 3 is a view illustrating one of the split cores 9 of the stator core 10. In the split core 9, a recess 19 is formed on an outer periphery 11a of the yoke 11. The recess 19 forms a refrigerant passage between the stator core 10 and the shell 8 (FIG. 1). The recess 19 is disposed on a straight line E passing in the radial direction through the center of the tooth 12 in the width direction in this example, but the position of the recess 19 is not limited to this position.

Through holes 16 are formed in the yoke 11. Each through hole 16 is formed from one end to the other end of the stator core 10 in the axial direction and allows refrigerant of the compressor to pass. The through hole 16 is located on the straight line E passing through the center of the tooth 12 in the width direction and at the inner side of the recess 19 in the radial direction, but the position of the through hole 16 is not limited to this position. The sectional shape of the through hole 16 is semicircular in this example, and a portion of the through hole 16 in the form of a cord faces the recess 19. The sectional shape of the through hole 16 is not limited to a semicircular shape.

The crimping portions 17 and the crimping portions 18 for fixing the electromagnetic steel sheets 101 are formed in the yoke 11. Each crimping portion 17 is located at the inner side of the through hole 16 in the radial direction. The crimping portions 18 are located at both sides of the through hole 16 in the circumferential direction. The positions of the crimping portions 17 and 18 are not limited to these positions. The crimping portion 17 is a round crimping, and the crimping portion 18 is a V-crimping, but the crimping portions 17 and 18 are not limited to these types.

As illustrated in FIG. 1, the winding 2 is formed of a magnet wire and is wound around each tooth 12 by concentrated winding. The magnet wire is formed of an aluminum wire. The aluminum wire is formed of an aluminum conductor covered with an insulating film.

The magnet wire (aluminum wire in this example) constituting the winding 2 has a wire diameter of, for example, 1.0 mm. The number of turns of the winding 2 around one tooth 12 is, for example, 80 turns. The wire diameter and the number of turns of the winding 2 are determined depending on required characteristics of the motor 100 (for example, the number of rotations and torque), the supply voltage, and a sectional area of the slots 13.

An insulating portion 3 is provided for insulating the stator core 10 and the winding 2 from each other. The insulating portion 3 includes insulators 31 disposed at both ends of the stator core 10 in the axial direction, and insulating films 32 disposed on inner surfaces of the slots 13.

The insulators 31 are formed of a resin such as polybutylene terephthalate (PBT). The insulating film 32 is formed of a resin such as polyethylene terephthalate (PET) and has a thickness of 0.1 to 0.8 [mm] . The winding 2 is wound around the tooth 12 via the insulators 21 and the insulating films 32.

**(Configuration of Rotor 5)**

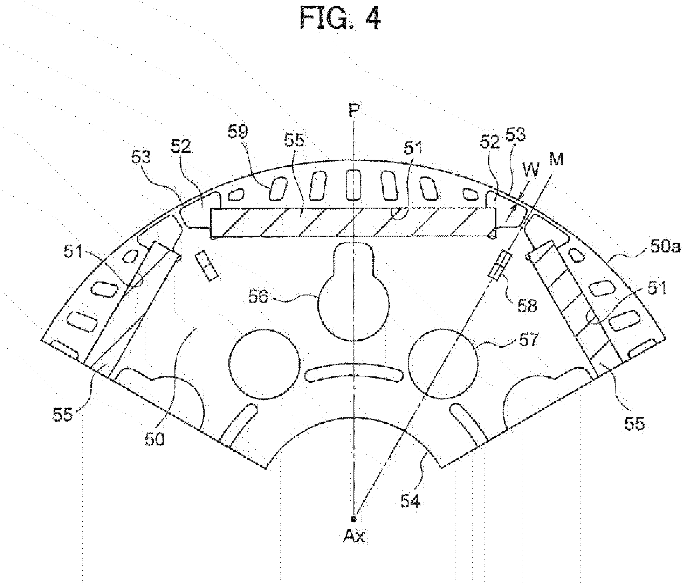

The rotor 5 includes a rotor core 50 having an annular shape about the axis Ax, and permanent magnets 55 attached to the rotor core 50. The rotor core 50 is configured so that electromagnetic steel sheets 501 (FIG. 5) are stacked in the axial direction and fixed together by crimping portions 58 (FIG. 4). Front and back surfaces of the electromagnetic steel sheets 501 are coated with not-shown insulating films. Each of the electromagnetic steel sheets 501 has a thickness of 0.1 to 0.7 [mm], which will be described later.

A center hole 54 is formed at the center of the rotor core 50 in the radial direction. The shaft 4 described above is fixed in the center hole 54 of the rotor core 50 by, for example, shrink fitting or press fitting. The rotor core 50 also has a circumferential outer periphery 50a.

A plurality of magnet insertion holes 51 are formed along the outer periphery 50a of the rotor core 50. One permanent magnet 55 is disposed in each of the magnet insertion holes 51. Each magnet insertion hole 51 corresponds to one magnetic pole. Since the rotor core 50 has six magnet insertion holes 51, the number of poles of the rotor 5 is six.

The number of poles of the rotor 5 is not limited to six, and only needs to be two or more. Two or more permanent magnets 55 may be disposed in each of the magnet insertion holes 51. Each of the magnet insertion holes 51 may Fextend in a V shape.

Each of the permanent magnets 55 has a flat plate member elongated in the axial direction of the rotor core 50, and has a width in the circumferential direction and a thickness in the radial direction. Each of the permanent magnets 55 is magnetized in the thickness direction. The permanent magnet 55 is constituted by a rare earth magnet containing neodymium (Nd), iron (Fe), and boron (B), for example.

The rare earth magnet has a property in which a coercive force decreases with a temperature rise, and the decreasing rate is -0.5 to -0.6 [%/K] . To avoid demagnetization of the rare earth magnets when a maximum load expected in the compressor occurs, a coercive force of 1100 to 1500 [A/m] is needed. To obtain this coercive force at an ambient temperature of 150°C, a coercive force at room temperature, that is, 20 [°C], needs to be 1800 to 2300 [A/m].

Thus, dysprosium (Dy) may be added to the rare earth magnet. The coercive force of the rare earth magnet at room temperature is 1800 [A/m] without addition of Dy, and is 2300 [A/m] when 2 [wt%] of Dy is added. However, the addition of Dy causes an increase in manufacturing cost and a decrease in residual magnetic flux density, and thus it is desirable to add as least Dy as possible or not to add Dy.

FIG. 4 is an enlarged view illustrating a portion of the rotor 5. Each of the magnet insertion holes 51 extends linearly in a direction orthogonal to a line in the radial direction passing through the center of the magnet insertion hole 51 in the circumferential direction. The center of the magnet insertion hole 51 in the circumferential direction is a magnetic pole center P. The line passing in the radial direction through the magnetic pole center P is referred to as a magnetic pole center line. An interpole portion M is formed between adjacent magnetic poles.

Flux barriers 52 that are openings are formed at both sides of each magnet insertion hole 51 in the circumferential direction. A bridge 53 that is a thin portion is formed between each flux barrier 52 and the outer periphery 50a of the rotor core 50. The bridge 53 has a width W in the radial direction, which will be described later.

Slits 59 each elongated in the radial direction are formed at the outer side of the magnet insertion hole 51 in the radial direction. The slits 59 are formed to control magnetic flux density distribution at the surface of the rotor 5. Seven slits 59 are formed symmetrically with respect to the magnetic pole center line in this example, but the number and arrangement of the slits 59 may be varied. It is also possible that the rotor core 50 has no slit 59.

Through holes 56 and 57 are formed at the inner side of the magnet insertion holes 51 in the radial direction. Each of the through holes 56 and 57 is formed from one end to the other end in the axial direction of the rotor core 50, and forms a refrigerant passage. The position of the through hole 56 in the circumferential direction coincides with the magnetic pole center P, and the position of the through hole 57 in the circumferential direction coincides with the inter-pole portion M. However, the positions of the through holes 56 and 57 are not limited to these positions. It is also possible that the rotor core 50 does not have the through hole 56 or 57.

The crimping portion 58 for fixing the electromagnetic steel sheets 501 is formed at a position corresponding to the inter-pole portion M in the circumferential direction and on the inner side of the corresponding flux barrier 52 in the radial direction. The position of the crimping portion 58 is not limited to this position. The crimping portion 58 is not shown in FIG. 1.

**(Configuration for Suppressing Temperature Rise of Winding 2)**

FIG. 5 is a longitudinal sectional view illustrating the motor 100. The insulators 31 described above are disposed at both ends of the stator core 10 in the axial direction. Each of the insulators 31 includes an outer peripheral wall 31a, an inner peripheral wall 31c, and a body 31b.

The outer peripheral wall 31a of the insulator 31 is located on the yoke 11 (FIG. 3), the inner peripheral wall 31c is located on the tooth tip 12a of the tooth 12 (FIG. 3), and the body 31b is located on the extension portion 12b of the tooth 12 (FIG. 3). The winding 2 is wound around the body 31b and guided by the outer peripheral wall 31a and the inner peripheral wall 31c from both sides in the radial direction.

A length of the stator core 10 in the axial direction is denoted by H1. A length of the rotor core 50 in the axial direction is denoted by H2. In this example, the length H1 of the stator core 10 is shorter than the length H2 of the rotor core 50. That is, $H1 < H2$ is satisfied. However, this embodiment is not limited to such a configuration, and the length H1 of the stator core 10 may be equal to or longer than the length H2 of the rotor core 50.

The outer periphery of the stator core 10, that is, the outer periphery 11a of the yoke 11, is fixed to the inner periphery of the shell 8 of the compressor. A refrigerant passage is formed between the stator core 10 and the shell 8 by the recess 19 (FIG. 3) described above.

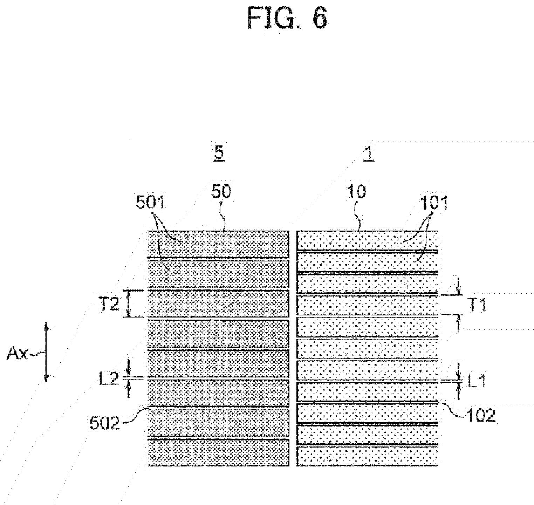

FIG. 6 is a schematic view illustrating the electromagnetic steel sheets 101 and 501 of the stator core 10 and the rotor core 50. Each of the electromagnetic steel sheets 101 constituting the stator core 10 has a thickness T1. Each of the electromagnetic steel sheets 501 constituting the rotor core 50 has a thickness T2. In the first embodiment, the thickness T1 of each electromagnetic steel sheet 101 is thinner than the thickness T2 of each electromagnetic steel sheet 501. That is, $T1 < T2$ is satisfied.

As an example, the thickness T1 of each electromagnetic steel sheet 101 is 0.35 [mm], and the thickness T2 of each electromagnetic steel sheet 501 is 0.5 [mm].

A stacking gap L1 between the electromagnetic steel sheets 101 of the stator core 10 is equal to a stacking gap L2 between the electromagnetic steel sheets 501 of the rotor core 50 (i.e., $L1 = L2$). The stacking gap L1 is a gap between the electromagnetic steel sheets 101 adjacent to each other in the axial direction. The stacking gap L2 is a gap between the electromagnetic steel sheets 501 adjacent to each other in the axial direction. Each of the stacking gaps L1 and L2 is a value on the order of 10 [pm], that is, on the order of $10^{-2}$ [mm].

In a case where the gap between adjacent ones of the electromagnetic steel sheets 101 is not uniform in a plane orthogonal to the axis Ax, an average value thereof is used as the stacking gap L1. Similarly, in a case where the gap between adjacent ones of the electromagnetic steel sheets 501 is not uniform in a plane orthogonal to the axis Ax, an average value thereof is used as the stacking gap L2.

In the first embodiment, the electromagnetic steel sheets 101 of the stator core 10 and the electromagnetic steel sheets 501 of the rotor core 50 are formed of the same material, and thus, has the same silicon content. An example in which the electromagnetic steel sheets 101 and 501 have different silicon contents will be described in a third embodiment.

A space factor of the electromagnetic steel sheets 101 per a unit length of the stator core 10 in the axial direction is defined as a stacking factor O1 of the stator core 10. The stacking factor O1 is obtained by $O1 = H1/(T1 \times n1) \times 100[\%]$, based on the length H1 of the stator core 10 in the axial direction, the thickness T1 of each electromagnetic steel sheet 101, and the number n1 of the electromagnetic steel sheets 101.

For example, in a case where the stacking factor O1 of the stator core 10 is 90[%], it means that clearances occupy 10[%] of the length of the stator core 10 in the axial direction.

To obtain the stacking factor O1, the thickness T1 of one electromagnetic steel sheet 101 is first measured, and then, n1 electromagnetic steel sheets 101 are stacked to form the stator core 10. Thereafter, the length H1 of the stator core 10 is measured, and the stacking factor O1 is calculated from the above equation.

A space factor of the electromagnetic steel sheets 501 per a unit length of the rotor core 50 in the axial direction is defined as a stacking factor O2 of the rotor core 50. The stacking factor O2 is obtained by $O2 = H2/(T2 \times n2) \times 100[\%]$, based on the length H2 of the rotor core 50 in the axial direction, the thickness T2 of each electromagnetic steel sheet 501, and the number n2 of the electromagnetic steel sheets 501.

To obtain the stacking factor O2, the thickness T2 of one electromagnetic steel sheet 501 is first measured, and then, n2 electromagnetic steel sheets 501 are stacked to form the rotor core 50. Thereafter, the length H2 of the rotor core 50 is measured, and the stacking factor O2 is calculated from the above equation.

The stacking factor O1 of the stator core 10 is smaller than the stacking factor O2 of the rotor core 50. In other words, O1 < O2 is satisfied. As an example, the stacking factor O1 is 95[%], and the stacking factor O2 is 97[%].

Since the stacking factor O1 of the stator core 10 is smaller than the stacking factor O2 of the rotor core 50, the sum of clearances between the electromagnetic steel sheets 101 of the stator core 101 per a unit length in the axial direction is larger than the sum of clearances between the electromagnetic steel sheets 501 of the rotor core 50 per a unit length in the axial direction. Accordingly, the amount of refrigerant flowing through the stator core 10 increases as described later, and the effect of suppressing a temperature rise of the winding 2 is obtained.

The term "stacking gap" refers to a gap [mm] between the electromagnetic steel sheets adjacent to each other in the axial direction. On the other hand, the term "clearance between electromagnetic steel sheets" refers to a region sandwiched between the electromagnetic steel sheets adjacent to each other in the axial direction.

**(Method for Manufacturing Motor)**

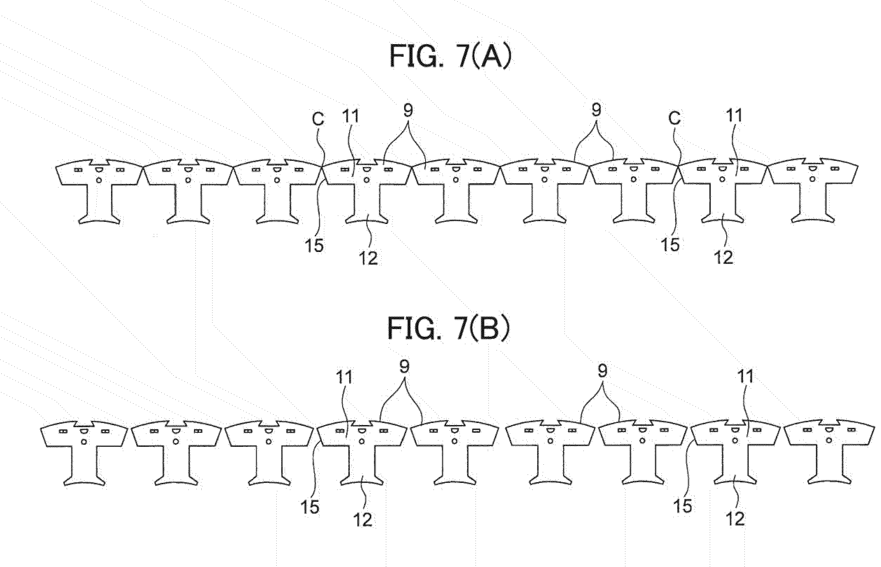

Next, a method for manufacturing the motor 100 according to the first embodiment will be described. First, the electromagnetic steel sheets 101 are punched by press work into a shape in which the split cores 9 are arranged linearly as illustrated in FIG. 7(A). In the example illustrated in FIG. 7(A), the split cores 9 are coupled to each other at coupling portions C on the outer peripheral side of the split faces 15. In this regard, as illustrated in FIG. 7(B), the split cores 9 may be separated from each other.

Thereafter, the punched electromagnetic steel sheets 101 are stacked in the axial direction and fixed by the crimping portions 17 and 18 to form a stacked body. The insulating portion 3 is attached to the stacked body, and the winding 2 is wound around each of the teeth 12.

The methods for winding the winding 2 include concentrated winding and distributed winding. Concentrated winding is employed in this example. In particular, the winding 2 is not wound over a plurality of teeth 12 but is wound around each of the teeth 12. Such a winding method is called salient pole concentrated winding.

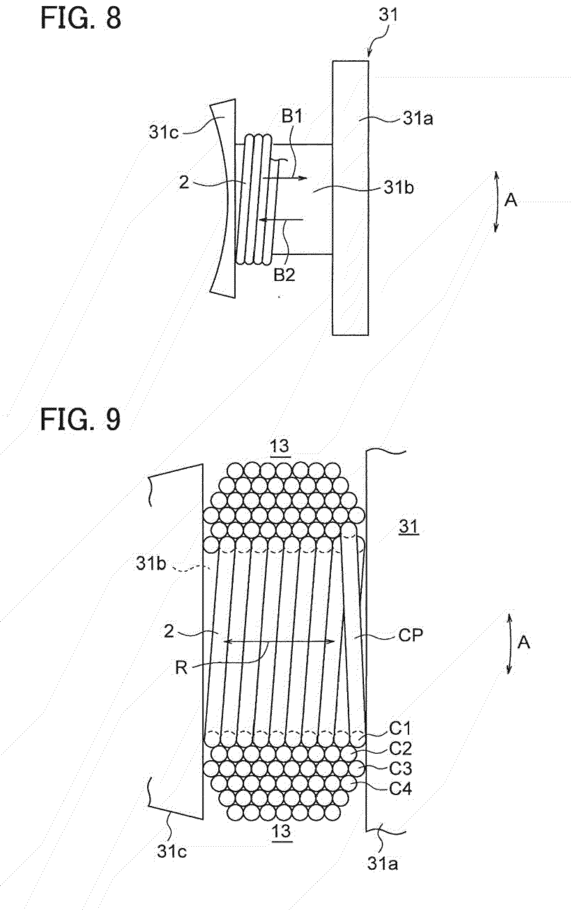

FIG. 8 is a schematic view for describing the winding method of the winding 2. FIG. 8 is a view of the insulator 31 seen from one side in the axial direction. In FIG. 8, the circumferential direction is indicated by arrow A. The winding 2 is wound by using a winding nozzle around the tooth 12 via the insulator 31 and the insulating film 32 (FIG. 1).

As indicated by arrow B1, a first layer of the winding 2 is wound from the inner peripheral wall 31c toward the outer peripheral wall 31a of the insulator 31.

As indicated by arrow B2, a second layer of the winding 2 is wound from the outer peripheral wall 31a toward the inner peripheral wall 31c of the insulator 31. The directions of arrows B1 and B2 may be reversed.

FIG. 9 is a sectional view illustrating a winding pattern of the winding 2 in a plane orthogonal to the axis Ax. In FIG. 9, the circumferential direction is indicated by arrow A, and the radial direction is indicated by arrow R. Coils in the first layer, the second layer, a third layer, and a fourth layer of the winding 2 are denoted by characters C1, C2, C3, and C4, respectively.

The winding 2 is wound by regular winding. Specifically, when n represents an integer of one or more, the coil $Cn+1$ in the $(n+1)^{th}$ layer is disposed so that the coil $Cn+1$ is in contact with two coils $Cn$ in the $n^{th}$ layer. Since the winding 2 is wound by regular winding, adhesiveness between the winding 2 and the tooth 12 increases.

A cross point CP at which the coil $Cn$ in the $n^{th}$ layer of the winding 2 and the coil $Cn+1$ in the $(n+1)^{th}$ layer intersect with each other is located on one end surface of the tooth 12 in the axial direction. On the other hand, coils of the winding 2 located in the slot 13 extend in the axial direction. Accordingly, adhesiveness between the winding 2 and the side surface of the tooth 12, that is, the surface facing the slot 13, is especially high.

After the winding 2 is wound around each of the teeth 12 in the manner described above, the split cores 9 are coupled in an annular shape. In the case where the split cores 9 are coupled in the coupling portions C as illustrated in FIG. 7(A), the split cores 9 at both ends in the arrangement direction are welded at the split faces 15. In the case where the split cores 9 are separated from each other as illustrated in FIG. 7(B), the split cores 9 are welded to each other at the split faces 15.

Through the foregoing steps, the stator 1 in which the winding 2 is wound on the stator core 10 is completed.

Concurrently with the assembly of the stator 1, assembly of the rotor 5 is performed. Specifically, the electromagnetic steel sheets 501 are stacked in the axial direction and fixed at the crimping portions 58 to thereby form the rotor core 50. The permanent magnets 55 are inserted into the magnet insertion holes 51 of the rotor core 50. A balance weight may be attached to the rotor core 50 when necessary. In this manner, the rotor 5 is completed.

Subsequently, the rotor 5 is incorporated in the stator 1. In this manner, the motor 100 is completed. In this example, the winding 2 is wound around the teeth 12 of the split cores 9 and then the split cores 9 are combined in the annular shape. However, the winding 2 may be wound around the teeth 12 of the annular stator core 10.

**(Function)**

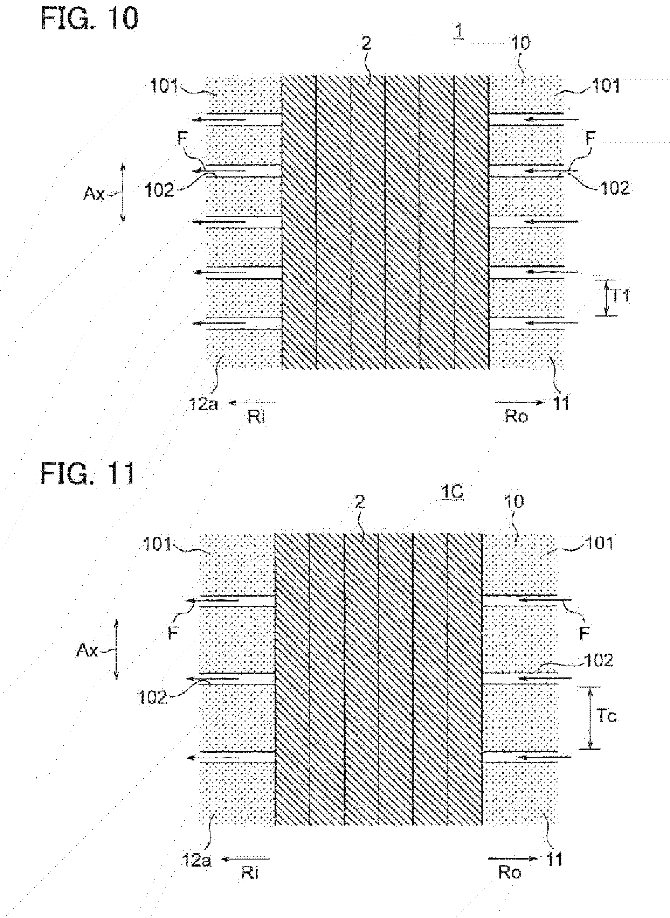

Next, function of the first embodiment will be described. FIG. 10 is a schematic view illustrating a contact portion between the stator core 10 and the winding 2 in the stator 1 according to the first embodiment. FIG. 11 is a schematic view illustrating a contact portion between a stator core 10 and a winding 2 in a stator 1C of a comparative example.

FIGS. 10 and 11 each show a cross section taken along a plane crossing the slot 13 of the stator 1 (FIG. 3) in the radial direction. The inner side in the radial direction, that is, the side closer to the tooth tip 12a of the tooth 12, is indicated by arrow Ri, and the outer side in the radial direction, that is, the side closer to the yoke 11, is indicated by arrow Ro. The direction of the axis Ax is indicated by arrow Ax.

In each of FIGS. 10 and 11, clearances 102 are formed between the electromagnetic steel sheets 101 adjacent to each other in the axial direction. In the compressor, refrigerant flows through the refrigerant passage between the recess 19 of the stator core 10 (FIG. 3) and the shell 8, and a part of the refrigerant flows through the clearances 102 of the stator core 10, as indicated by arrow F.

The refrigerant flowing through the clearances 102 of the stator core 10 flows to the inner side in the radial direction to pass by the winding 2. This refrigerant has the function of dissipating heat of the winding 2. Although the insulating film 32 is interposed between the stator core 10 and the winding 2, the insulating film 32 has small influence on heat dissipation from the winding 2 by the refrigerant since the thickness of the insulation film 32 is thin.

A thickness Tc of each electromagnetic steel sheet 101 of the stator core 101 of the comparative example illustrated in FIG. 11 is thicker than the thickness T1 of each electromagnetic steel sheet 101 of the stator core 10 according to the first embodiment. Thus, in the first embodiment, the number of clearances 102 per a unit length of the stator core 10 in the axial direction is larger than that in the comparative example. That is, the stacking factor O1 of the electromagnetic steel sheets 101 of the stator core 10 according to the first embodiment is smaller than the stacking factor Oc of the electromagnetic steel sheets 101 of the stator core 10 of the comparative example.

As the stacking factor decreases, the sum of the clearances 102 per a unit length in the axial direction increases, and accordingly, the flow rate of refrigerant flowing through the clearances 102 increases. In the first embodiment, the thickness T1 of each electromagnetic steel sheet 101 is thin, and thus the stacking factor O1 is small. Accordingly, the amount of refrigerant flowing through the clearances 102 of the stator core 10 is larger than that in the comparative example.

Since the winding 2 is formed of an aluminum wire having a higher electrical resistance than a copper wire, the amount of heat generation when current flows through the winding 2 is large. In the first embodiment, heat of the winding 2 can be efficiently dissipated by refrigerant, and thereby, a temperature rise of the winding 2 can be suppressed.

In addition, the stator core 10 has the through holes 16 (FIG. 3), and refrigerant also flows into the clearances 102 from the through holes 16. Thus, the amount of refrigerant flowing through the clearances 102 can be increased, and the effect of suppressing a temperature rise of the winding 2 can thereby be enhanced.

The number and arrangement of the through holes 16 in the stator core 10 may be varied. In this regard, the through holes 16 interrupt magnetic fluxes flowing through the stator core 10, and thus, the through holes 16 are preferably formed in the yoke 11 rather than the teeth 12 where magnetic fluxes are concentrated.

In particular, as illustrated in FIG. 3, in the case where the through hole 16 is disposed on the straight line E in the radial direction passing through the center in the circumferential direction of the tooth 12 in the yoke 11, it is possible to minimize interference of magnetic fluxes while obtaining a sufficient flow rate of refrigerant.

The insulator 31 is located at a position covering the through hole 16 of the stator core 10 in FIG. 1. However, as indicated by broken lines in FIG. 3, the insulator 31 may be disposed at a position not covering the through hole 16 (that is, at a position at which the through hole 16 is exposed). In this case, refrigerant easily flows into the through hole 16 and the effect of suppressing a temperature rise of the winding 2 can be further enhanced.

However, even in the case where the through hole 16 is covered with the insulator 31 (FIG. 1), refrigerant flows into the through hole 16 by way of the clearances 102 from the recess 19, and thus the effect of suppressing a temperature rise of the winding 2 by refrigerant can still be obtained.

In general, as the thickness of an electromagnetic steel sheet decreases, an iron loss occurring in the electromagnetic steel sheet decreases. In the first embodiment, the thickness T1 of each electromagnetic steel sheet 101 of the stator core 10 is thinner than the thickness T2 of each electromagnetic steel sheet 501 of the rotor core 50, and thus an iron loss in the stator core 10 can be reduced, so that a temperature rise in the stator core 10 can thereby be suppressed.

Since a temperature rise of the stator core 10 is suppressed, refrigerant is less likely to be heated while the refrigerant passes through the clearances 102 of the stator core 10. Accordingly, the heat dissipation effect of the winding 2 by refrigerant can be enhanced, and the effect of suppressing a temperature rise of the winding 2 can be enhanced.

When the stator core 10 and the rotor core 50 are compared, an iron loss occurring in the stator core 10 is larger than an iron loss occurring in the rotor core 50. This is because the relative position of the stator core 10 to magnetic fluxes of the permanent magnets 55 significantly changes during rotation of the rotor 5.

It is generally known that an iron loss occurring in the stator core 10 is two to four times as large as an iron loss occurring in the rotor core 50. It is also known that an iron loss is inversely proportional to the first to second power of the thickness of the electromagnetic steel sheet. Thus, when the thickness T2 of each electromagnetic steel sheet 501 of the rotor core 50 is set to be √2 times to 4 times of the thickness T1 of each electromagnetic steel sheet 101 of the stator core 10, equivalent iron loss occurs in the stator core 10 and the rotor core 50.

The √2 times, which is the lower limit, is a value in a case where an iron loss occurring in the stator core 10 is twice as large as an iron loss occurring in the rotor core 50 and an iron loss is inversely proportional to the second power of the thickness of the electromagnetic steel sheet. The four times, which is the upper limit, is a value in a case where an iron loss occurring in the stator core 10 is four times as larger as an iron loss occurring in the rotor core 50 and an iron loss is inversely proportional to the first power of the thickness of the electromagnetic steel sheet.

On the other hand, when the thickness T2 of each electromagnetic steel sheet 501 of the rotor core 50 exceeds four times the thickness T1 of each electromagnetic steel sheet 101 of the stator core 10, an iron loss occurring in the rotor core 50 may exceed an iron loss occurring in the stator core 10. Consequently, heat of the rotor core 50 is transferred to the stator core 10, and the effect of suppressing a temperature rise of the winding 2 may degrade. For this reason, the thicknesses T1 and T2 preferably satisfy $T2 < 4 \times T1$.

As illustrated in FIG. 4, a width W of the bridge 53 in the radial direction between the flux barrier 52 and the outer periphery 50a of the rotor core 50 is preferably less than or equal to the thickness T1 of each electromagnetic steel sheet 101 of the stator core 10. That is, $W < T1$ is preferably satisfied. This will be described later.

When the motor 100 is driven, a current with a frequency synchronized to the rotation speed is supplied to the winding 2 of the stator 1 so that a rotating magnetic field is thereby generated to cause the rotor 5 to rotate. At this time, a part of magnetic fluxes flowing from the tooth 12 to the rotor core 50 passes through the bridge 53 of the rotor core 50 and flows back to the adjacent tooth 12. That is, a short-circuit path passing through the bridge 53 is formed.

Magnetic fluxes flowing through the short-circuit path do not contribute to rotation of the rotor 5 and may cause an iron loss in the tooth tip 12a of the tooth 12. When the iron loss occurs in the tooth tip 12a, the temperature of the stator core 10 may rise and the effect of suppressing a temperature rise of the winding 2 may be degraded. Thus, it is desirable to reduce magnetic fluxes flowing through the short-circuit path.

The range of magnetic fluxes flowing through the bridge 53 in the axial direction is restricted by the thickness T1 of each electromagnetic steel sheet 101 of the stator core 10. The front and back surfaces of the electromagnetic steel sheets 101 and 501 are coated with insulating films, and magnetic fluxes flowing through one electromagnetic steel sheet 501 in the axial direction do not flow to the adjacent electromagnetic steel sheet 501 in the axial direction but flows to the electromagnetic steel sheets 101 of the stator core 10.

On the other hand, magnetic fluxes flowing through the bridge 53 in the radial direction are restricted by the width W of the bridge 53 in the radial direction. When the radial width W of the bridge 53 is narrower than the thickness T1 described above, a flow of magnetic fluxes in the radial direction can be restricted. As a result of restriction of magnetic fluxes flowing from the stator core 10 toward the rotor core 50, magnetic fluxes flowing through the short-circuit path can be reduced, and degradation of the effect of suppressing a temperature rise of the winding 2 can be reduced.

**(Advantages of Embodiment)**

As described above, the motor 100 according to the first embodiment includes the rotor 5 including the rotor core 50 and the permanent magnets 55, and the stator 1 including the stator core 10 and the winding 2. The stacking factor O1 of the electromagnetic steel sheets 101 of the stator core 10 and the stacking factor O2 of the electromagnetic steel sheets 501 of the rotor core 50 satisfy O1 < O2. Thus, the amount of refrigerant flowing through the clearances 102 between the electromagnetic steel sheets 101 of the stator core 10 is increased, and heat of the winding 2 can be taken by the refrigerant, so that a temperature rise of the winding 2 can be suppressed.

In addition, since the thickness T1 of each electromagnetic steel sheet 101 of the stator core 10 is thinner than the thickness T2 of each electromagnetic steel sheet 501 of the rotor core 50, the number of the clearances 102 of the stator core 10 per a unit length in the axial direction is large. Accordingly, the amount of refrigerant passing through the clearances 102 can be increased. Furthermore, since the thickness T1 is thin, occurrence of an iron loss in the stator core 10 can be suppressed, and a temperature rise of the stator core 10 can be suppressed. As a result, the effect of suppressing a temperature rise of the winding 2 can be enhanced.

Since the thickness T1 and the thickness T2 satisfy $T2 < 4 \times T1$, a temperature rise due to an iron loss occurring in the rotor core 50 can be suppressed, and a temperature rise of the winding 2 caused by heat transfer from the rotor core 50 to the stator core 10 can be suppressed.

Since the width W of the bridge 53 of the rotor core 50 in the radial direction is smaller than the thickness T1 of each electromagnetic steel sheet 101 of the stator core 10, magnetic fluxes flowing between the teeth 12 by way of the short-circuit path can be reduced. Accordingly, occurrence of an iron loss in the tooth tip 12a is suppressed, and the effect of suppressing a temperature rise of the winding 2 can be enhanced.

The stator core 10 includes the through holes 16 formed from one end to the other end of the stator core 10 in the axial direction. Thus, refrigerant in the compressor easily flows into the clearances 102 via the through holes 16, and the effect of suppressing a temperature rise of the winding 2 can thereby be enhanced.

The stator core 10 includes the recess 19 forming the refrigerant passage between the stator core 10 and the inner peripheral surface the shell 8 of the compressor. Thus, refrigerant in the compressor easily flows into the clearances 102 via the recess 19, and the effect of suppressing a temperature rise of the winding 2 can thereby be enhanced.

Since the winding 2 is wound around the teeth 12 by salient pole concentrated winding, adhesiveness between the winding 2 and the teeth 12 increases. Accordingly, a larger part of refrigerant passing through the clearances 102 contacts the winding 2, and the effect of suppressing a temperature rise of the winding 2 can thereby be enhanced.

In addition, since the stator core 10 is constituted by the plurality of split cores 9, the winding 2 can be wound around the teeth 12 before the split cores 9 are combined in the annular shape. Accordingly, flexibility in movement of the winding nozzle is large, and the winding 2 can be wound with high density. As a result, adhesiveness between the winding 2 and the teeth 12 increases, and the effect of suppressing a temperature rise of the winding 2 can thereby be enhanced.

## SECOND EMBODIMENT

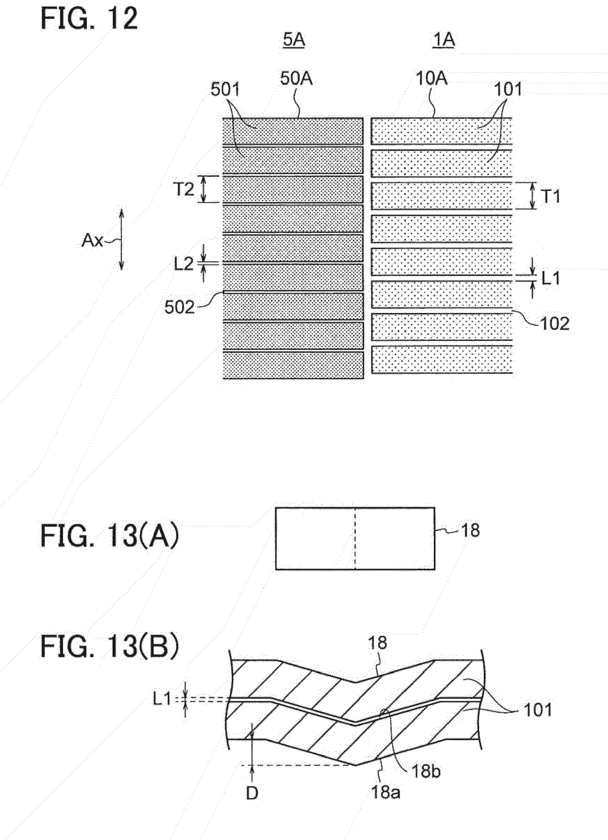

Next, a second embodiment will be described. FIG. 12 is a schematic view illustrating a stator core 10A of a stator 1A and a rotor core 50A of a rotor 5A according to the second embodiment. In the second embodiment, a stacking gap L1 between electromagnetic steel sheets 101 of the stator core 10A is wider than a stacking gap L2 between electromagnetic steel sheets 501 of the rotor core 50A. That is, L1 > L2 is satisfied.

A thickness T1 of each electromagnetic steel sheet 101 of the stator core 10A is equal to a thickness T2 of each electromagnetic steel sheet 501 of the rotor core 50A. That is, T1 = T2 is satisfied. The thickness T1 of each electromagnetic steel sheet 101 of the stator core 10A may be thinner than the thickness T2 of each electromagnetic steel sheet 501 of the rotor core 50A as in the first embodiment.

In the second embodiment, a stacking factor O1 of the electromagnetic steel sheets 101 of the stator core 10A is smaller than a stacking factor O2 of the electromagnetic steel sheets 501 of the rotor core 50A. That is, O1 < O2 is satisfied.

The stacking gap L1 between the electromagnetic steel sheets 101 can be adjusted in forming the crimping portions 17 and 18 (FIG. 3). Each of the crimping portions 17 and 18 can be formed by performing press work on the electromagnetic steel sheets 101.

FIGS. 13(A) and 13(B) are respectively a plan view and a sectional view schematically illustrating the crimping portion 18 that is a V-crimping. A V-shaped protrusion 18a formed on the back surface of each electromagnetic steel sheet 101 is fitted in a V-shaped recess 18b formed on the front surface of its underlying electromagnetic steel sheet 101, so that the plurality of electromagnetic steel sheets 101 can thereby be fixed to each other. In the press work, the protruding amount of the protrusion 18a, that is, the depth of the recess 18b (hereinafter referred to as a crimping depth D), is adjusted to thereby adjust the stacking gap L1 between the electromagnetic steel sheets 101.

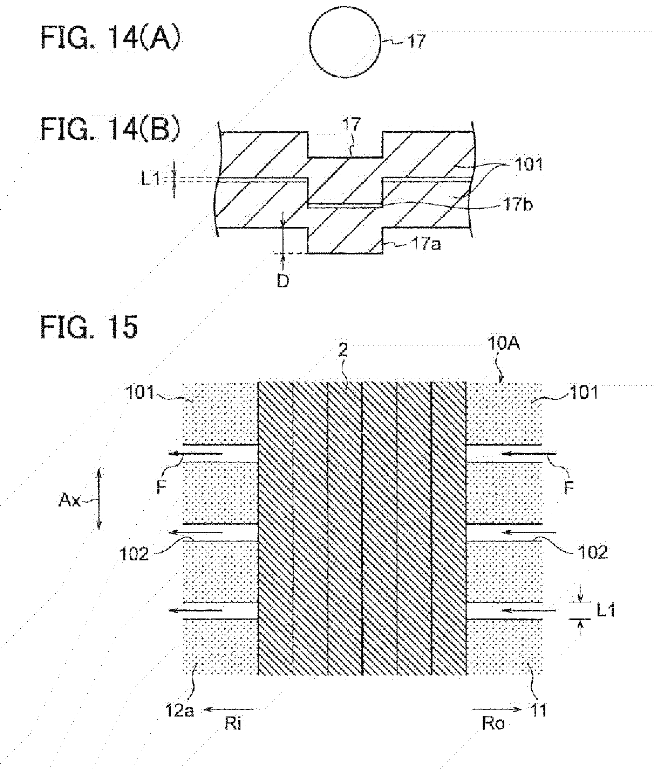

FIGS. 14(A) and 14(B) are respectively a plan view and a sectional view schematically illustrating the crimping portion 17 that is a round crimping. A cylindrical protrusion 17a formed on the back surface of each electromagnetic steel sheet 101 is fitted in a cylindrical recess 17b formed on the front surface of its underlying electromagnetic steel sheet 101, so that the plurality of electromagnetic steel sheets 101 can thereby be fixed to each other. In the press work, the degree of the protrusion 17a, that is, the depth of the recess 17b (hereinafter referred to as a crimping depth) D, is adjusted to thereby adjust the stacking gap L1 between the electromagnetic steel sheets 101.

While FIG. 13 (A) through FIG. 14 (B) show the crimping portions 17 and 18 of the electromagnetic steel sheets 101 of the stator core 10A, the stacking gap L2 between the electromagnetic steel sheets 501 of the rotor core 50A can also be adjusted similarly.

In the second embodiment, the crimping depth D of each electromagnetic steel sheet 101 of the stator core 10A is made deeper than the crimping depth D of each electromagnetic steel sheet 501 of the rotor core 50A, and thus the stacking gap L1 between the electromagnetic steel sheets 101 is wider than the stacking gap L2 between the electromagnetic steel sheets 501.

FIG. 15 is a schematic view illustrating a contact portion between the stator core 10A and a winding 2 in the stator 1 according to the second embodiment. FIG. 15 shows a cross section taken along a plane crossing the slot 13 in the radial direction. The inner side in the radial direction, that is, the side closer to the tooth tip 12a, is indicated by arrow Ri, and the outer side in the radial direction, that is, the side closer to the yoke 11, is indicated by arrow Ro. The direction of the axis Ax is indicated by arrow Ax.

As described above, the stacking gap L1 between the electromagnetic steel sheets 101 of the stator core 10A is wider than the stacking gap L2 between the electromagnetic steel sheets 502 of the rotor core 50A (FIG. 15) in the first embodiment. Thus, the amount of refrigerant flowing through the clearances 102 of the stator core 10A can be increased, and accordingly, the efficiency in suppressing a temperature rise of the winding 2 can be enhanced.

Except for the aspects described above, the motor according to the second embodiment is configured similarly to the motor 100 according to the first embodiment.

As described above, in the second embodiment, since the stacking gap L1 of the stator core 10A is wider than the stacking gap L2 of the rotor core 50A, the amount of refrigerant passing through the clearances 102 of the stator core 10A is increased, and a temperature rise of the winding 2 can thereby be suppressed.

Regarding the thickness T1 of each electromagnetic steel sheet 101 of the stator core 10A and the stacking gap L1 between the electromagnetic steel sheets 101, and the thickness T2 of each electromagnetic steel sheet 501 of the rotor core 50A and the stacking gap L2 between the electromagnetic steel sheets 501, T1 < T2 and L1 = L2 are satisfied in the first embodiment, whereas T1 = T2 and L1 > L2 are satisfied in the second embodiment. However, the present disclosure is not limited to these examples, and it is also possible that T1 < T2 and L1 > L2 are both satisfied.

**THIRD EMBODIMENT**

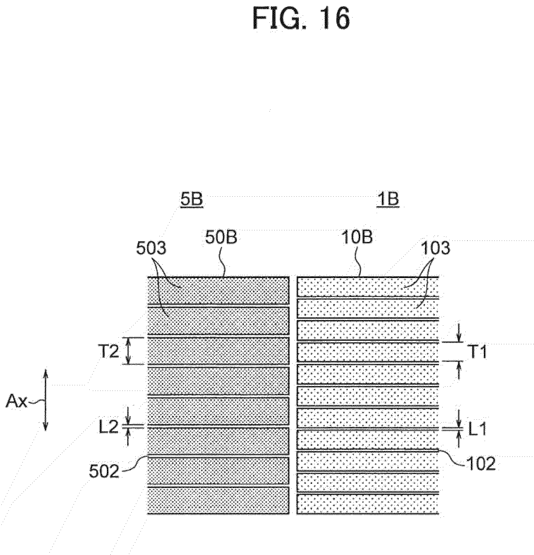

Next, a third embodiment will be described. FIG. 16 is a schematic view illustrating a stator core 10B of a stator 1B and a rotor core 50B of a rotor 5B according to the third embodiment. In the third embodiment, an iron loss density of electromagnetic steel sheets 101 of the stator core 10B measured by an Epstein test is higher than that of electromagnetic steel sheets 501 of the rotor core 50B.

In FIG. 16, the thickness T1 of each electromagnetic steel sheet 101 of the stator core 10B is thinner than the thickness T2 of each electromagnetic steel sheet 501 of the rotor core 50B as in the first embodiment. However, the stacking gap L1 of the stator core 10B may be wider than the stacking gap L2 of the rotor core 50B as described in the second embodiment, and these relationships may be both satisfied.

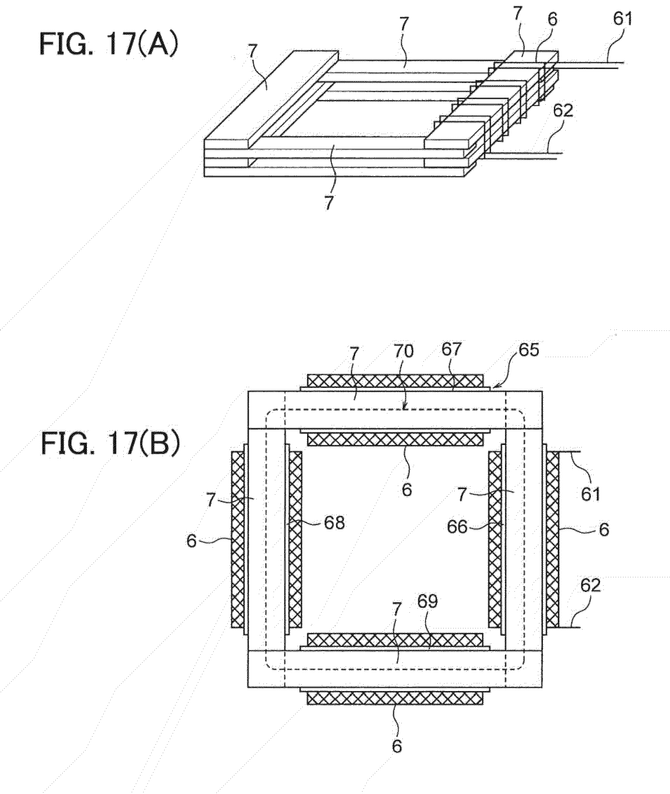

The Epstein test is defined in JIS_C2550. FIGS. 17(A) and 17(B) are schematic views for describing the Epstein test. As illustrated in FIG. 17(A), in the Epstein test, samples 7 of electromagnetic steel sheets processed into strip-shapes are used. Each sample 7 has a width of 30 mm and a length of 280 mm.

As illustrated in FIG. 17(B), an Epstein tester includes a spool 65 formed of an insulating resin. The spool 65 is obtained by combining four spool parts 66, 67, 68, and 69 in a square shape. Each of the spool parts 66 through 69 has a rectangular cross section and has space therein.

Inside the spool parts 66 through 69, the abovementioned number of samples 7 are inserted in a lattice pattern to form a magnetic path 70. A coil 6 is wound around the outer periphery of each of the spool parts 66 through 69. The coil 6 includes an input-side primary coil 61 and a detection-side secondary coil 62. The number of turns of the primary coil 61 is equal to the number of turns of the secondary coil 62.

Based on a difference between a product of a primary current and a primary voltage input to the primary coil 61 and a product of a secondary current and a secondary voltage input to the secondary coil 62, an iron loss of the sample 7 is measured. An iron loss per a unit weight when a sinusoidal change in magnetic flux density is induced at a frequency of 50 Hz with a maximum magnetic flux density of 1.5 T is defined as an iron loss density [W/kg].

In the third embodiment, an iron loss density W1 of the electromagnetic steel sheet 101 of the stator core 10B is lower than an iron loss density W2 of the electromagnetic steel sheet 501 of the rotor core 50B. That is, W1 < W2 is satisfied. As an example, the iron loss density W1 of the electromagnetic steel sheet 101 of the stator core 10B is 2.0 to 2.5 [W/kg], and the iron loss density W2 of the electromagnetic steel sheet 501 of the rotor core 50B is 2.5 to 5.0 [W/kg].

With a configuration in which the iron loss density W1 of the electromagnetic steel sheet 101 of the stator core 10B is lower than the iron loss density W2 of the electromagnetic steel sheet 501 of the rotor core 50B, an iron loss occurring in the stator core 10B can be reduced, and a temperature rise can be suppressed. Accordingly, a temperature rise of refrigerant passing through the clearances 102 of the stator core 10B is less likely to occur. As a result, heat dissipation effect of the winding 2 by refrigerant can be enhanced, and the effect of suppressing a temperature rise of the winding 2 can be enhanced.

Such a difference between the iron loss densities W1 and W2 is obtained by, for example, setting a silicon content S1 in the electromagnetic steel sheet 101 larger than a silicon content S2 in the electromagnetic steel sheet 501 (i.e., S1 > S2) .

As an example, the silicon content S1 in the electromagnetic steel sheet 101 of the stator core 10B is 3.5 [wt%], and the silicon content S2 in the electromagnetic steel sheet 501 of the rotor core 50B is 3.3 [wt%] . Each of the silicon contents S1 and S2 in the electromagnetic steel sheets 101 and 501 is preferably within the range from 2.0 to 7.0%.

The silicon contents S1 and S2 in the electromagnetic steel sheets 101 and 501 can be adjusted by selecting the grade, product-number, or the like of the electromagnetic steel sheets 101 and 501.

In general, as the silicon content in electromagnetic steel sheets increases, an iron loss density measured by the Epstein test decreases, and an iron loss occurring in the electromagnetic steel sheets decreases. For this reason, the silicon content S1 in the electromagnetic steel sheet 101 of the stator core 10B is set larger than the silicon content S2 in the electromagnetic steel sheet 501 of the rotor core 50B, so that an iron loss occurring in the stator core 10B can be reduced, and a temperature rise can be suppressed. Accordingly, a temperature rise of refrigerant passing through the clearances 102 of the stator core 10B is less likely to occur, and as a result, the effect of heat dissipation of the winding 2 by refrigerant increases, and the effect of suppressing a temperature rise of the winding 2 can thereby be enhanced.

As described above, in the third embodiment, since the iron loss density W1 of the electromagnetic steel sheets 101 of the stator core 10B measured by the Epstein test is lower than the iron loss density W2 of the electromagnetic steel sheets 501 of the rotor core 50B measured by the Epstein test, an iron loss occurring in the stator core 10B is reduced to suppress a temperature rise. Accordingly, it is possible to enhance the effect of suppressing a temperature rise of the winding 2 by refrigerant passing through the clearances 102 of the stator core 10B.

In addition, since the silicon content S1 in the electromagnetic steel sheet 101 of the stator core 10B is larger than the silicon content S2 in the electromagnetic steel sheet 501 of the rotor core 50B, an iron loss occurring in the stator core 10B can be reduced and a temperature rise can be suppressed. Accordingly, it is possible to enhance the effect of suppressing a temperature rise of the winding 2 by refrigerant passing through the clearances 102 of the stator core 10B.

**(Compressor)**

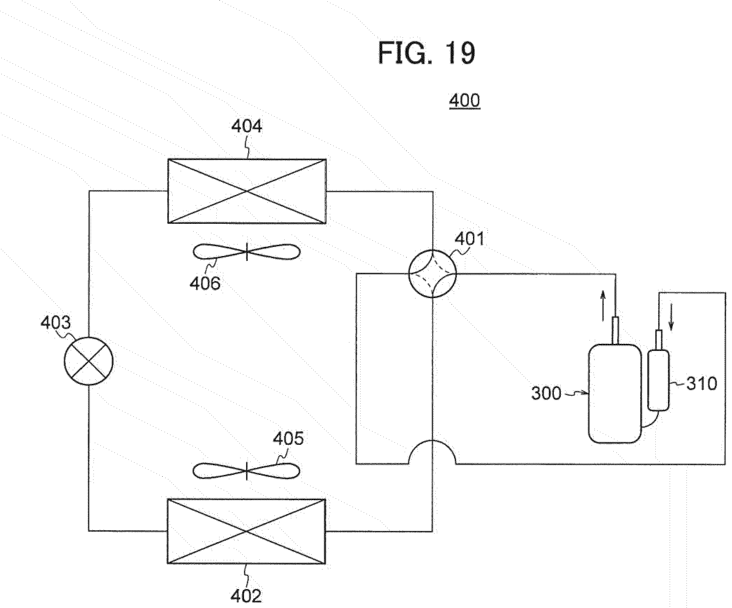

FIG. 18 is a longitudinal sectional view illustrating a compressor 300 to which the motor of each embodiment is applicable. The compressor 300 is a rotary compressor, and is used for, for example, a refrigeration cycle apparatus 400 (FIG. 19) .

FIG. 18 is a sectional view illustrating the compressor 300. The compressor 300 is a rotary compressor in this example, and includes a closed container 307, a compression mechanism 301 disposed in the closed container 307, and a motor 100 that drives the compression mechanism 301.

The compression mechanism 301 includes a cylinder 302 including a cylinder chamber 303, a shaft 4 of the motor 100, a rolling piston 304 fixed to the shaft 4, a vane (not shown) diving the inside of the cylinder chamber 303 into a suction side and a compression side, and an upper frame 305 and a lower frame 306 through which the shaft 4 is inserted and which close end faces of the cylinder chamber 303 in the axial direction. An upper discharge muffler 308 and a lower discharge muffler 309 are respectively attached to the upper frame 305 and the lower frame 306.

The closed container 307 is a cylindrical container and includes the shell 8 illustrated in FIG. 1. A bottom portion of the closed container 307 stores refrigerating machine oil (not shown) for lubricating sliding portions of the compression mechanism 301. The shaft 4 is rotatably held by the upper frame 305 and the lower frame 306 serving as bearing portions.

The cylinder 302 includes the cylinder chamber 303 therein, and the rolling piston 304 eccentrically rotates in the cylinder chamber 303. The shaft 4 includes an eccentric shaft part, and the rolling piston 304 is fitted in the eccentric shaft part.

The stator 1 of the motor 100 is incorporated in the shell 8 of the closed container 307 by a method such as shrink fitting, press fitting, or welding. Electric power is supplied from a glass terminal 311 fixed to the closed container 307 to the winding 2 of the stator 1. The shaft 4 is fixed to the center hole 54 of the rotor 5.

An accumulator 310 is attached to the outer side of the closed container 307. A refrigerant gas flows into the accumulator 310 from a refrigerant circuit through a suction pipe 314. In a case where liquid refrigerant flows from the suction pipe 314 together with the refrigerant gas, the liquid refrigerant is stored in the accumulator 310, and the refrigerant gas is supplied to the compressor 300.

A suction pipe 313 is fixed to the closed container 307, and a refrigerant gas is supplied from the accumulator 310 to the cylinder 302 through the suction pipe 313. An upper portion of the closed container 307 includes a discharge pipe 312 for discharging refrigerant to the outside.

As refrigerant in the compressor 300, R410A, R407C, R22 or the like may be used, for example. However, from the viewpoint of preventing global warming, refrigerant having a low global warming potential (GWP) is preferably used. As the low-GWP refrigerant, the following refrigerants can be used, for example.

(1) First, halogenated hydrocarbon having a double bond of carbon in its composition, such as hydro-fluoro-olefin (HFO)-1234yf ($CF_3CF=CH_2$) can be used. HFO-1234yf has a GWP of 4.

(2) Further, hydrocarbon having a double bond of carbon in its composition, such as R1270 (propylene), may be used. R1270 has a GWP of 3, which is smaller than that of HFO-1234yf, but has flammability higher than that of HFO-1234yf.

(3) A mixture containing at least one of halogenated hydrocarbon having a double bond of carbon in its composition or hydrocarbon having a double bond of carbon in its composition, such as a mixture of HFO-1234yf and R32, may be used. Since HFO-1234yf described above is a low-pressure refrigerant, a pressure loss tends to increase, and performance of a refrigeration cycle (especially an evaporator) may degrade. Thus, it is practically preferable to use a mixture with R32 or R41, which is a higher-pressure refrigerant than HFO-1234yf.

Operation of the compressor 300 is as follows. A refrigerant gas supplied from the accumulator 310 passes through the suction pipe 313, and is supplied to the cylinder chamber 303 of the cylinder 302. When the motor 100 is driven by supplying a current to the winding 2, the shaft 4 rotates together with the rotor 5. Then, the rolling piston 304 fitted in the shaft 4 eccentrically rotates in the cylinder chamber 303, and refrigerant is compressed in the cylinder chamber 303.

The refrigerant compressed in the cylinder chamber 303 passes through the discharge mufflers 308 and 309, and further passes through the through holes 56 and 57 of the rotor 5 (FIG. 1) and the through holes 16 and the recesses 19 of the stator 1 (FIG. 3) and rises in the closed container 307. The refrigerant that has risen in the closed container 307 is discharged through the discharge pipe 312 and supplied to a high-pressure side of the refrigeration cycle.

Although refrigerating machine oil is mixed in the refrigerant compressed in the cylinder chamber 303, separation of the refrigerant and the refrigerant machine oil is promoted while the refrigerant passes through the through holes 56 and 57 of the rotor 5 or the through holes 16 and the recesses 19 of the stator 1, and an inflow of the refrigerating machine oil into the discharge pipe 312 is prevented.

The motor 100 described in each of the embodiments can suppress a temperature rise of the winding 2, and thus, high reliability of the compressor 300 can be obtained for a long period of time.

**(Refrigeration Cycle Apparatus)**

The refrigeration cycle apparatus 400 to which the motor of each embodiment is applicable will now be described. FIG. 19 is a view illustrating a configuration of the refrigeration cycle apparatus 400. The refrigeration cycle apparatus 400 is an air conditioner in this example, but may be a refrigerator or the like.

The refrigeration cycle apparatus 400 includes the compressor 300, a four-way valve 401 as a switching valve, a condenser 402 that condenses refrigerant, a decompressor 403 that decompresses refrigerant, and an evaporator 404 that vaporizes refrigerant.

The compressor 300, the condenser 402, the decompressor 403, and the evaporator 404 are coupled by a refrigerant pipe 407, and constitute a refrigerant circuit. The compressor 300 includes an outdoor fan 405 facing the condenser 402, and an indoor fan 406 facing the evaporator 404.

Operation of the refrigeration cycle apparatus 400 is as follows. The compressor 300 compresses sucked refrigerant and sends out the compressed refrigerant as a high-temperature and high-pressure refrigerant gas. The four-way valve 401 is configured to switch a flow direction of refrigerant, and in a cooling operation, causes the refrigerant sent from the compressor 300 to flow to the condenser 402, as indicated by solid lines in FIG. 19.

The condenser 402 performs heat exchange between the refrigerant sent from the compressor 300 and outdoor air sent by the outdoor fan 405, condenses the refrigerant, and sends out the condensed refrigerant as liquid refrigerant. The decompressor 403 expands the liquid refrigerant sent from the condenser 402, and sends out the expanded refrigerant as low-temperature and low-pressure liquid refrigerant.

The evaporator 404 performs heat exchange between indoor air and the low-temperature and low-pressure liquid refrigerant sent from the decompressor 403, evaporates the refrigerant, and sends out the refrigerant as a refrigerant gas. Air from which heat has been taken by the evaporator 404 is supplied by the indoor fan 406 into a room.

In a heating operation, the four-way valve 401 sends out the refrigerant sent from the compressor 300 to the evaporator 404. In this case, the evaporator 404 functions as a condenser, and the condenser 402 functions as an evaporator.

The motor 100 described in each of the first through third embodiments is included as a driving source of the compressor 300, and thus reliability of the refrigeration cycle apparatus 400 can be enhanced. The compressor including one of the motors 100 according to the first through third embodiments is also appliable to another refrigeration cycle apparatus.

Although the preferred embodiments have been specifically described above, the present disclosure is not limited to these embodiments, and various improvements and modifications may be made.

**DESCRIPTION OF REFERENCE CHARACTERS**

1, 1A, 1B, 1C stator, 2 winding, 3 insulating portion, 4 shaft, 5, 5A, 5B rotor, 8 shell, 9 split core, 10, 10A, 10B stator core, 11 yoke, 12 tooth, 12a tooth tip, 13 slot, 16 through hole, 17 crimping portion (round crimping), 18 crimping portion (V-crimping), 19 recess, 31 insulator, 50, 50A, 50B rotor core, 51 magnet insertion hole, 52 flux barrier, 53 bridge, 55 permanent magnet, 100 motor, 101 electromagnetic steel sheet, 102 stacking gap, 300 compressor, 301 compression mechanism, 302 cylinder, 307 closed container, 400 refrigeration cycle apparatus, 401 four-way valve, 402 condenser, 403 decompressor, 404 evaporator, 501 electromagnetic steel sheet, 502 stacking gap.

**Claims**

1. A motor comprising:

   a rotor comprising a rotor core having an annular shape about an axis and formed of electromagnetic steel sheets stacked in a direction of the axis, the rotor comprising a permanent magnet attached to the rotor core; and
   a stator comprising a stator core surrounding the rotor core and formed of electromagnetic steel sheets stacked in the direction of the axis, the stator comprising a winding wound on the stator core and formed of an aluminum wire, wherein a stacking factor O1 of the electromagnetic steel sheets of the stator core and a stacking factor O2 of the electromagnetic steel sheets of the rotor core satisfy:

$$O1 < O2.$$

2. The motor according to claim 1, wherein a thickness T1 of each of the electromagnetic steel sheets of the stator core and a thickness T2 of each of the electromagnetic steel sheets of the rotor core satisfy:

$$T1 < T2.$$

3. The motor according to claim 1 or 2, wherein a thickness T1 of each of the electromagnetic steel sheets of the stator core and a thickness T2 of each of the electromagnetic steel sheets of the rotor core satisfy:

$$T1 < T2 < 4 \times T1.$$

4. The motor according to any one of claims 1 to 3, wherein the rotor core has a magnet insertion hole in which the permanent magnet is disposed, and a bridge located between the magnet insertion hole and the rotor core,

   wherein the bridge has a width W in a radial direction about the axis, and
   wherein the width W and the thickness T1 of each of the electromagnetic steel sheets of the stator core satisfy:

$$W < T1.$$

5. The motor according to any one of claims 1 to 4, wherein a gap L1 between the electromagnetic steel sheets of the stator core and a gap L2 between the electromagnetic steel sheets of the rotor core satisfy:

$$L1 > L2.$$

6. The motor according to any one of claims 1 to 5, wherein when a sinusoidal change in magnetic flux density is induced at a frequency of 50 Hz with a maximum magnetic flux density of 1.5 T in an Epstein test, an iron loss density W1 per a unit weight of the electromagnetic steel sheets of the stator core and an iron loss density W2 per a unit weight of the electromagnetic steel sheets of the rotor core satisfy:

$$W1 < W2.$$

7. The motor according to any one of claims 1 to 6, wherein a silicon content S1 in the electromagnetic steel sheets of the stator core and a silicon content S2 in the electromagnetic steel sheets of the rotor core satisfy:

$$S1 > S2.$$

8. The motor according to any one of claims 1 to 7, wherein the stator core has a through hole formed from one end to the other end of the stator core in an axial direction.

9. The motor according to claim 8, wherein the stator core comprises a yoke having an annular shape about the axis, and a tooth extending from the yoke toward the axis, and
   wherein the through hole is formed in the yoke.

10. The motor according to claim 8 or 9, wherein the winding is wound on the stator core via an insulating portion, and
    wherein the through hole is exposed at an end face of the stator core in a direction of the axis and is not covered with the insulating portion.

11. The motor according to any one of claims 1 to 10, wherein the stator core is fixed to an inner side of a shell of a compressor, and
    wherein a recess is formed on an outer periphery of the stator core, the recess forming a refrigerant passage between the outer periphery of the stator core and an inner peripheral surface of the shell.

12. The motor according to any one of claims 1 to 11, wherein the stator core comprises a yoke having an annular shape about the axis, and a tooth extending from the yoke toward the axis, and
    wherein the winding is wound around the tooth by salient pole concentrated winding.

13. The motor according to claim 12, wherein the winding is wound around the tooth by regular winding.

14. The motor according to any one of claims 1 to 13, wherein the stator core has a plurality of split cores combined in an annular shape.

15. A compressor comprising:

    the motor according to any one of claims 1 to 14; and
    a compression mechanism driven by the motor.

**16.** A refrigeration cycle apparatus comprising:
the compressor according to claim 15, a condenser,
a decompressor, and an evaporator.

# FIG. 1

**FIG. 2**

**FIG. 3**

# FIG. 4

EP 4 425 749 A1

FIG. 5

EP 4 425 749 A1

# FIG. 6

## FIG. 7(A)

## FIG. 7(B)

FIG. 8

FIG. 9

FIG. 10

FIG. 11

FIG. 12

FIG. 13(A)

FIG. 13(B)

FIG. 14(A)

FIG. 14(B)

FIG. 15

# FIG. 16

FIG. 17(A)

FIG. 17(B)

# FIG. 18

FIG. 19

## INTERNATIONAL SEARCH REPORT

International application No.

**PCT/JP2021/039592**

### A. CLASSIFICATION OF SUBJECT MATTER

*H02K 1/14*(2006.01)i
FI:   H02K1/14 Z

According to International Patent Classification (IPC) or to both national classification and IPC

### B. FIELDS SEARCHED

Minimum documentation searched (classification system followed by classification symbols)

H02K1/14

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | WO 2017/126053 A1 (MITSUBISHI ELECTRIC CORP.) 27 July 2017 (2017-07-27) paragraphs [0015]-[0057], fig. 1-6 | 1-3 |
| Y | paragraphs [0015]-[0057], fig. 1-6 | 1-16 |
| Y | JP 2020-174496 A (TOYOTA BOSHOKU CORP.) 22 October 2020 (2020-10-22) paragraphs [0017]-[0029], fig. 4 | 1-16 |
| Y | JP 2008-172968 A (HITACHI, LTD.) 24 July 2008 (2008-07-24) paragraph [0015], fig. 3 | 1-16 |
| Y | JP 6949282 B1 (MITSUBISHI ELECTRIC CORP.) 13 October 2021 (2021-10-13) paragraph [0019] | 4-16 |
| Y | WO 2020/110191 A1 (MITSUBISHI ELECTRIC CORP.) 04 June 2020 (2020-06-04) paragraph [0031] | 4-16 |
| Y | WO 2018/216168 A1 (MITSUBISHI ELECTRIC CORP.) 29 November 2018 (2018-11-29) paragraph [0025], fig. 4 | 8-16 |

☑ Further documents are listed in the continuation of Box C.     ☑ See patent family annex.

| | | |
|---|---|---|
| *  Special categories of cited documents: | "T" | later document published after the international filing date or priority date and not in conflict with the application but cited to understand the principle or theory underlying the invention |
| "A"  document defining the general state of the art which is not considered to be of particular relevance | | |
| "E"  earlier application or patent but published on or after the international filing date | "X" | document of particular relevance; the claimed invention cannot be considered novel or cannot be considered to involve an inventive step when the document is taken alone |
| "L"  document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O"  document referring to an oral disclosure, use, exhibition or other means | | |
| "P"  document published prior to the international filing date but later than the priority date claimed | "&" | document member of the same patent family |

| Date of the actual completion of the international search | Date of mailing of the international search report |
|---|---|
| **07 December 2021** | **21 December 2021** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**

International application No.

**PCT/JP2021/039592**

**C.     DOCUMENTS CONSIDERED TO BE RELEVANT**

| Category* | Citation of document, with indication, where appropriate, of the relevant passages | Relevant to claim No. |
|---|---|---|
| Y | JP 2017-204980 A (HONDA MOTOR CO., LTD.) 16 November 2017 (2017-11-16) paragraph [0030], fig. 2-5 | 8-16 |

Form PCT/ISA/210 (second sheet) (January 2015)

INTERNATIONAL SEARCH REPORT
Information on patent family members

International application No.

**PCT/JP2021/039592**

| Patent document cited in search report | | | Publication date (day/month/year) | Patent family member(s) | | | Publication date (day/month/year) |
|---|---|---|---|---|---|---|---|
| WO | 2017/126053 | A1 | 27 July 2017 | US 2018/0358846 A1 paragraphs [0021]-[0066], fig. 1-6 CN 108702075 A | | | |
| JP | 2020-174496 | A | 22 October 2020 | (Family: none) | | | |
| JP | 2008-172968 | A | 24 July 2008 | US 2008/0169710 A1 paragraph [0026], fig. 3 EP 1944853 A2 KR 10-2008-0067301 A CN 101227110 A | | | |
| JP | 6949282 | B1 | 13 October 2021 | (Family: none) | | | |
| WO | 2020/110191 | A1 | 04 June 2020 | (Family: none) | | | |
| WO | 2018/216168 | A1 | 29 November 2018 | US 2020/0303974 A1 paragraph [0046], fig. 4 EP 3633827 A1 CN 110663160 A | | | |
| JP | 2017-204980 | A | 16 November 2017 | (Family: none) | | | |

Form PCT/ISA/210 (patent family annex) (January 2015)

**REFERENCES CITED IN THE DESCRIPTION**

**Patent documents cited in the description**

- WO 2017126053 A